# EUROPÄISCHE PATENTSCHRIFT

(11) **EP 2 567 173 B1**
(45) Veröffentlichungstag und Bekanntmachung des Hinweises auf die Patenterteilung: **26.02.2014**
(21) Anmeldenummer: 11716585.2
(22) Anmeldetag: 02.05.2011
(51) Int. Cl.: F28D 20/00, F24D 11/00, F24H 7/00, F24J 2/34

(54) **VORRICHTUNG UND VERFAHREN ZUR SPEICHERUNG VON WÄRME**
DEVICE AND METHOD FOR STORING HEAT
DISPOSITIF ET PROCÉDÉ POUR ACCUMULER DE LA CHALEUR

(30) Priorität: 04.05.2010 EP 10161922
(43) Veröffentlichungstag der Anmeldung: 13.03.2013
(73) Patentinhaber: BASF SE, 67056 Ludwigshafen (DE)
(72) Erfinder: WORTMANN, Jürgen, 67117 Limburgerhof (DE); SCHÄFER, Claus, 67126 Hochdorf-Assenheim (DE); LUTZ, Michael, 67346 Speyer (DE); SEELER, Fabian, 69221 Dossenheim (DE); GÄRTNER, Martin, 67549 Worms (DE); MAJOR, Felix, 68167 Mannheim (DE); SCHIERLE-ARNDT, Kerstin, 64673 Zwingenberg (DE); MACHHAMMER, Otto, 68163 Mannheim (DE); HUBER, Günther, 67071 Ludwigshafen (DE); MAURER, Stephan, 67435 Neustadt-Gimmeldingen (DE)
(86) Internationale Anmeldenummer: PCT/EP2011/056946
(87) Internationale Veröffentlichungsnummer: WO 2011/138270

(56) Entgegenhaltungen:
- EP-A2- 1 767 882
- DE-B3- 10 347 884
- DE-U1-202009 015 401
- GB-A- 2 274 329
- US-A- 4 345 715
- US-A- 4 537 180
- US-A- 4 624 242

## Beschreibung

Die Erfindung geht aus von einer Vorrichtung zur Speicherung von Wärme in einem Solarkraftwerk, umfassend ein Wärmespeichermedium, das zur Speicherung von Wärme Wärme aufnimmt und zur Nutzung der gespeicherten Wärme Wärme abgibt, sowie einen Behälter zur Aufnahme des Wärmespeichermediums, wobei der Behälter mit einer gasdichten Abdeckung verschlossen ist. Die Erfindung geht weiterhin aus von einem Verfahren zur Speicherung von Wärme in einem Solarkraftwerk, bei dem in einem Wärmetauscher Wärme von einem Wärmeträger an ein Wärmespeichermedium übertragen wird oder in den Wärmetauscher Wärme aus dem Wärmespeichermedium an den Wärmeträger abgeführt wird, wobei das Wärmespeichermedium in einem Behälter aufgenommen ist, der mit einer gasdichten Abdeckung verschlossen ist. Eine solche Vorrichtung und ein solches Verfahren werden von EP 1 890 035 A2 offenbart.

Durch den Einsatz der Vorrichtung bzw. des Verfahrens zur Speicherung von Wärme ist es möglich, Solarkraftwerke unterbrechungsfrei auch in sonnenfreien Zeiten, beispielsweise nachts, zu betreiben. Um einen unterbrechungsfreien Betrieb zu ermöglichen, benötigen große Solarkraftwerke sehr große Wärmespeicher. So ist zum Beispiel bekannt, dass bei derzeit bereits betriebenen Parabolrinnensolarkraftwerken mit einer elektrischen Leistung von 50 MW Salzspeicher eingesetzt werden, die bis zu 28.000 t Salz als Wärmespeichermedium enthalten. Das Salz wird in zwei dual angeordneten Tanks aufbewahrt. Unter Sonnenlicht wird im Solarfeld erhitztes Wärmeträgermedium vom kalten in den heißen Tank gefahren. Beim Entladen wird das Wärmespeichermedium dem heißen Tank entnommen und im Kraftwerk unter Gewinnung elektrischer Energie gekühlt. Das abgekühlte Wärmespeichermedium wird in den kalten Tank zurückgefahren.

Um Solarkraftwerke mit einer größeren Leistung oder über einen längeren Zeitraum unterbrechungsfrei betreiben zu können, sind gegenüber den derzeit bekannten Vorrichtungen zur Speicherung von Wärme deutlich größere Wärmespeicher erforderlich. Hierbei besteht einerseits die Möglichkeit, eine große Anzahl kleinerer Speicher einzusetzen, was jedoch einen großen Platzbedarf erfordert oder große Speicher zu verwenden.

Um zu vermeiden, dass in dem Behälter ein Unterdruck entsteht, durch den unzulässig große Kräfte auf die Hülle des Behälters wirken, wird in den Behältern nicht belegtes Volumen durch ein Gas belegt. Bei oxidationsfähigen Wärmespeichermedien muss zusätzlich eine Oxidation vermieden werden. Hierzu wird zum Beispiel Stickstoff als Gas zur Belegung des nicht vom Wärmespeichermedium eingelegten Volumens eingesetzt. Bei Wärmespeichermedien, die nicht oxidieren können, kann hierzu auch Luft verwendet werden.

Bei Temperaturschwankungen im Speichersystem ändern sich aufgrund Wärmeausdehnungen des Wärmespeichermediums die vom Wärmespeichermedium eingenommenen Volumina. In besonders dominantem Maße ändert sich hierbei das Volumen des gasförmigen Tankinhaltes. Die Beherrschung hoher Drücke durch die Konstruktion des Behälters erfordert einen hohen Aufwand. Aus diesem Grund sollen zusätzliche Druckbelastungen auf die Hülle des Behälters ausgeschlossen werden. Hierzu werden große Behälter vorzugsweise bei Umgebungsdruck betrieben. Derzeit wird die Volumenänderung aufgrund der Wärmeausdehnung des Wärmespeichermediums dadurch gewährleistet, dass Gas bei Volumenzunahme an die Umgebung abgeführt wird. Bei einer Abnahme der Temperatur des Wärmespeichermediums muss dann erneut Gas zugeführt werden. Dies erfordert die Beschaffung und Bereitstellung von Gas, um entsprechende Schwankungen ausgleichen zu können. Bei Verwendung eines Wärmespeichermediums mit einem hohen Dampfdruck muss mit besonders großen Gasaustauschmengen, verursacht durch Verdampfung in der heißen Speicherphase und durch Kondensation in der kalten Speicherphase, gerechnet werden.

Bei oxidationsempfindlichen Wärmespeichermedien, beispielsweise Öl, übernimmt das Gas eine Inertisierungsfunktion. Sauerstoff kann auch bei kleinen Konzentrationen zu Oxidationsprozessen des Wärmespeichermediums führen, wobei sich schädliche, zum Beispiel unlösliche, Produkte bilden können. Hierdurch können unerwünschte Ablagerungen auftreten. Zudem wird die Speicherfähigkeit des Wärmespeichermediums durch die Bildung der unlöslichen Produkte beeinflusst. Derzeit kann zur Entfernung von solchen ungewünschten Ablagerungen eine destillative Schwersiederabtrennung durchgeführt werden. Alternativ wird auch Wärmespeichermedium, in dem sich Ablagerungen gebildet haben, ausgetauscht. Bei einem brennbaren Wärmespeichermedium kann eine ausreichend große Konzentration an Sauerstoff mit einem merkbaren Dampfdruck zudem ein Explosionsrisiko schaffen. Bei nicht oxidationsempfindlichen Substanzen als Wärmespeichermedium, zum Beispiel bei Einsatz von Nitratschmelzen, kann die Vorrichtung zum Beispiel auch mit Luft als Gas zum Ausgleich von Volumenschwankungen betrieben werden.

Insbesondere wenn eine Gasüberdeckung mit einem inerten Gas erforderlich ist, fallen hohe Betriebskosten an. Derzeit wird in Solarkraftwerken zum Volumenausgleich flüssiger Stickstoff eingesetzt, der verdampft wird und auf das Wärmespeichermedium geleitet wird. Durch Verwendung großer isobarer Gasspeicher mit variablem Volumen, die auch als Gasometer bezeichnet werden, kann ein Gaspuffersystem aufgebaut werden. Durch das variable Volumen kann bei Aufheizung das Überschussgas aufgenommen und bei Abkühlung abgegeben werden. Der Einsatz derartiger Gasometer ist jedoch bei Verwendung von Wärmespeichermedien mit einem merkbaren Dampfdruck problematisch, da Wärmespeichermedium in das Gasometer einkondensiert. Um das Einkondensieren zu verhindern, sind Kühler erforderlich, die im Gas enthaltenes verdampftes Wärmespeichermedium effektiv auskondensieren und rückführen. Diese Einrichtungen sind jedoch sehr aufwändig in Errichtung und Betrieb.

Weiterhin sind auch Schwimmdeckeltanks bekannt. Schwimmdeckel sind jedoch im Allgemeinen nicht völlig gasdicht ausgeführt und verfügen zum Beispiel über Wanddichtungen zur Behälterwand. Eine Verbesserung der Gasdichtheit wird zum Beispiel durch Einsatz eines zweiten Dichtungssystems erzielt. Für die Anwendung bei den hohen Temperaturen eines Wärmespeichers ist diese Lösung jedoch nicht ausreichend. Sauerstoff kann an das bei hohen Lagertemperaturen oxidationsempfindliche Material gelangen und durch Oxidation können sich unerwünschte Feststoffe oder bei Kohlenstoff enthaltenden Wärmespeichermedien auch unerwünschte Inertgase wie Kohlenmonoxid oder Kohlendioxid bilden. Bei Verwendung von schwefelhaltigen Wärmespeichermedien können sich Schwefeldioxid und Schwefeltrioxid bilden, die die Behälterwandungen durch Korrosion schädigen können.

Aufgabe der vorliegenden Erfindung ist es, eine Vorrichtung zur Speicherung von Wärme bereitzustellen, die die aus dem Stand der Technik bekannten Nachteile nicht aufweist und auch bei hohen Temperaturen sicher betrieben werden kann.

Gelöst wird die Aufgabe durch eine Vorrichtung zur Speicherung von Wärme in einer solarkraftwerk, Umfassend ein Wärmespeichermedium, das zur Speicherung von Wärme Wärme aufnimmt und zur Nutzung der gespeicherten Wärme Wärme abgibt, sowie einen Behälter zur Aufnahme des Wärmespeichermediums, wobei der Behälter mit einer gasdichten Abdeckung verschlossen ist, und bei der Mittel zum Volumenausgleich umfasst sind, um eine Volumenzunahme des Wärmespeichermediums aufgrund Temperaturzunahme und eine Volumenabnahme des Wärmespeichermediums aufgrund Temperaturabnahme auszugleichen.

Die Aufgabe wird weiterhin gelöst durch ein Verfahren zur Speicherung von Wärme in einer solarkraftwerk bei dem zur Speicherung von Wärme Wärme an ein Wärmespeichermedium übertragen wird oder zur Nutzung der Wärme Wärme aus dem Wärmespeichermedium an den Wärmeträger abgeführt wird, wobei das Wärmespeichermedium in einem Behälter aufgenommen ist, der mit einer gasdichten Abdeckung verschlossen ist, wobei eine Volumenausdehnung des Wärmespeichermediums durch eine Volumenvergrößerung des Behälters oder durch Strömen von Wärmespeichermedium aus dem Behälter in einen Pufferbehälter ausgeglichen wird und eine Volumenabnahme des Wärmespeichermediums durch eine Volumenverkleinerung des Behälters oder durch Strömen von Wärmespeichermedium aus einem Pufferbehälter in den Behälter ausgeglichen wird.

Die erfindungsgemäße Vorrichtung eignet sich insbesondere, wenn oxidationsempfindliche und/oder niedrigsiedende Substanzen als Wärmespeichermedium eingesetzt werden.

Durch die gasdichte Abdeckung des Behälters wird vermieden, dass Sauerstoff von außen an das Wärmespeichermedium gelangen kann. Auch wird vermieden, dass Gas, das im System enthalten ist, entweichen kann. Durch Einsatz der Mittel zum Volumenausgleich ist es jedoch insbesondere vorteilhaft, dass kein Gas im Behälter enthalten sein muss, mit dem Volumenschwankungen ausgeglichen werden können. Die Volumenschwankungen des Wärmespeichermediums werden einzig durch Vergrößerung oder Verkleinerung des Behälters oder alternativ durch Strömen von Wärmespeichermedium in einen Pufferbehälter ausgeglichen.

In einer ersten Ausführungsform umfassen die Mittel zum Volumenausgleich eine flexible Abdeckung des Behälters. Die flexible Abdeckung des Behälters kann zum Beispiel durch einen geeigneten Behälterdeckel realisiert werden, der sich bei einer Volumenausdehnung des Wärmespeichermediums hebt und bei einer Volumenabnahme des Wärmespeichermediums wieder senkt, ohne dass die Abdichtung am Rand der Abdeckung aufgehoben wird. Insbesondere ist es möglich, dass die flexible Abdeckung flexible Bereiche umfasst, die sich bei einer Volumenzunahme des Wärmespeichermediums ausdehnen und die bei einer Volumenabnahme des Wärmespeichermediums kontrahieren. Die flexiblen Bereiche des Deckels können sich dabei alternativ über die gesamte Abdeckung erstrecken oder nur Teile der Abdeckung einnehmen. Wenn die flexiblen Bereiche nur Teile der Abdeckung umfassen, so ist es zum Beispiel möglich, dass Teile der Abdeckung in Form eines Kompensators gestaltet sind, der sich bei einer Volumenzunahme ausdehnen kann. Ein solcher Kompensator weist zum Beispiel eine Form wie ein Balgen auf. Alternativ ist es auch möglich, dass durch den Einsatz der als Kompensator gestalteten Bereiche ein Heben und Senken der Abdeckung des Behälters entsprechend dem Volumen des Wärmespeichermediums realisiert wird. Durch die Verwendung von flexiblen Bereichen in der Abdeckung des Behälters ist es möglich, die Abdeckung fest mit dem Behälter, insbesondere gasdicht mit dem Behälter zu verbinden. Eine Verbindung kann zum Beispiel durch Schweißen erfolgen.

Um zu vermeiden, dass eine große Volumenzunahme durch Gas oberhalb des Wärmespeichermediums auftritt, ist in einer vorteilhaften Ausführungsform ein Gasabscheider vorgesehen. Mit diesem Gasabscheider können Leichtsieder und/oder Inertgase aus dem Behälter entfernt werden. Hierbei kann jeder beliebige, dem Fachmann bekannte Gasabscheider eingesetzt werden.

In einer alternativen Ausführungsform umfassen die Mittel zum Volumenausgleich einen Pufferbehälter, in den bei einer Volumenzunahme des Wärmespeichermediums ein Teil des Wärmespeichermediums strömen kann. Bei einer Volumenabnahme des Wärmespeichermediums strömt dann entsprechend Wärmespeichermedium aus dem Pufferbehälter zurück in den Behälter. Um den Pufferbehälter isobar betreiben zu können, ist es möglich, den Pufferbehälter mit einer flexiblen Abdeckung, wie vorstehend für den Behälter beschrieben, zu versehen. Alternativ ist es auch möglich, den Pufferbehälter mit einer Gasüberdeckung zu betreiben, wobei bei einer Füllung des Pufferbehälters mit Wärmespeichermedium Gas aus dem Pufferbehälter entnommen wird und bei einer Entnahme von Wärmespeichermedium aus dem Pufferbehälter wieder Gas in den Pufferbehälter einströmt. Hierzu ist es zum Beispiel möglich, einen separaten Gasspeicher vorzusehen, der das ausströmende Gas aufnimmt und aus dem Gas wieder in den Pufferbehälter zurückströmen kann. Alternativ ist es auch möglich, wie bei derzeit bekannten Systemen das Gas aus dem Pufferbehälter bei einer Volumenzunahme des Wärmespeichermediums ausströmen zu lassen und aus einem Gasvorrat wieder Gas in den Pufferbehälter zurückzuführen. Vorteil im Vergleich zum Volumenausgleich mit einer Gasüberdeckung im Behälter ist, dass das Volumen des Pufferbehälters sehr viel kleiner gehalten werden kann und damit eine sehr viel geringere Menge an Gas benötigt wird. Ein weiterer Vorteil ist, dass nur die Wärmeausdehnung des Wärmespeichermediums gepuffert werden muss. Die bei Systemen des Standes der Technik dominierende zu puffernde Volumenänderung durch thermische Ausdehnung des Gasraumes und durch Kondensation bei Wärmespeichermedien mit einem merkbaren Dampfdruck ist nicht notwendig.

Wenn ein Pufferbehälter eingesetzt wird, so wird vorzugsweise bei einer Volumenzunahme des Wärmespeichermediums Wärmespeichermedium aus dem Behälter im Bereich des Behälterbodens abgepumpt und in den Pufferbehälter überführt. Entsprechend wird bei einer Volumenabnahme des Wärmespeichermediums im Behälter Wärmespeichermedium aus dem Pufferbehälter über die gleiche Leitung wieder in den Behälter zurückgeführt.

Der Einsatz des Pufferbehälters erlaubt es, den zur Speicherung von Wärme eingesetzten Behälter mit einem konstanten Volumen an Wärmespeichermedium zu betreiben. Um jeweils das überschüssige Wärmespeichermedium bei einer Volumenzunahme aus dem Behälter abführen zu können oder bei einer Volumenabnahme die notwendige Menge an Wärmespeichermedium in den Behälter überführen zu können, ist eine geeignete Volumenregelung vorteilhaft. Die Volumenregelung kann zum Beispiel mittels einer Lageaufnahme eines das Wärmespeichermedium überdeckenden Lagerblechs erfolgen. Sobald sich das Lagerblech senkt, wird Wärmespeichermedium aus dem Pufferbehälter in den Behälter zugeführt, bei einem Anheben des Lagerblechs wird Flüssigkeit aus dem Behälter in den Pufferbehälter abgeführt. Das Zuführen bzw. Abführen des Wärmespeichermediums aus dem Pufferbehälter in den Behälter bzw. aus dem Behälter in den Pufferbehälter kann zum Beispiel durch ein Pumpensystem mit wechselbarer Pumprichtung übernommen werden. Das Pumpensystem wird dabei vorzugsweise von der Volumenregelung gesteuert.

Die Lageänderung des Lagerblechs kann zum Beispiel mit Hilfe geeigneter Sensoren erfasst werden. Sensoren, die hierzu eingesetzt werden können, sind zum Beispiel Lagesensoren und Kraftsensoren, wie sie in der Wägetechnik eingesetzt werden. So können zum Beispiel Standardwägezellen, gegebenenfalls mehrere in Parallelschaltung mit einer Kraftmessung über Dehnmessstreifen eingesetzt werden.

Um dem eingesetzten Wärmespeichermedium Wärme zuführen zu können oder dem Wärmespeichermedium Wärme entnehmen zu können, wird dieses in einer ersten Ausführungsform aus dem Behälter in einen geeigneten Wärmetauscher geleitet, in dem das Wärmespeichermedium von einem Wärmeträger Wärme aufnimmt oder Wärme an den Wärmeträger abgibt. In einer alternativen Ausführungsform wird das Wärmespeichermedium direkt als Wärmeträger genutzt. In diesem Fall wird das Wärmespeichermedium zum Beispiel in einem Solarkraftwerk zur Speicherung der Wärme in einem Solarfeld erhitzt und in den Behälter geleitet. Zur Nutzung der Wärme kann das Wärmespeichermedium dann zum Beispiel in einem Wärmetauscher zur Erzeugung von überhitztem Dampf zum Betrieb von Turbinen genutzt werden, die Generatoren zur Stromerzeugung antreiben. Zur Entnahme des Wärmespeichermediums werden üblicherweise Tauchpumpen eingesetzt, die in das Wärmespeichermedium hineinragen. Bei bekannten Systemen ist die Tauchpumpe zentral in der Mitte des Behälters angeordnet. Insbesondere bei Einsatz eines Behälters mit einer flexiblen Abdeckung erfordert eine solche Anordnung jedoch einen zusätzlichen flexiblen Bereich, der die Tauchpumpe umschließt. Um dies zu vermeiden ist es in einer bevorzugten Ausführungsform zum Beispiel möglich, die Tauchpumpe seitlich in den Behälter hineinragen zu lassen. Die Tauchpumpe durchbricht somit keine beweglichen Teile des Behälters. Neben einem seitlichen Hineinragen in den Behälter ist es alternativ auch möglich, eine mit dem Behälter verbundene Kammer vorzusehen, in der die Tauchpumpe angeordnet ist. Die Kammer ist dabei vorteilhafterweise nur durch eine Wand vom Behälter getrennt, so dass Behälter und Kammer insgesamt einteilig ausgebildet sind. Dies hat den Vorteil, dass nicht zwei separate Bauteile isoliert werden müssen sondern eine gemeinsame Isolierung für Behälter und Kammer ausreichend ist. Über einen geeigneten Zulauf, zum Beispiel einen Durchbruch in der Wand kann Wärmespeichermedium in die Kammer strömen und aus der Kammer mit Hilfe der Tauchpumpe entnommen werden. Der Durchbruch befindet sich dabei vorteilhafterweise im unteren Bereich.

Bei Einsatz eines Pufferbehälters ist es möglich, die Tauchpumpe ebenso seitlich in den Behälter zu führen oder eine Kammer vorzusehen, in der die Tauchpumpe angeordnet ist. Bevorzugt ist jedoch bei Verwendung eines Pufferbehälters, dass die Tauchpumpe, wie aus dem Stand der Technik bekannt, zentral im Behälter angeordnet ist.

In einer besonders bevorzugten Ausführungsform ist die Vorrichtung zur Speicherung von Wärme als Schichtenspeicher, auch thermokliner Speicher genannt, ausgebildet. Durch die Gestaltung der Vorrichtung zur Speicherung von Wärme als Schichtenspeicher ist es möglich, auf den aus dem Stand der Technik bekannten zweiten leeren Speicher zu verzichten. Es ist nicht notwendig, jeweils das Wärmespeichermaterial vom heißen Speicher in einen kalten Speicher bzw. vom kalten Speicher in einen heißen Speicher umzupumpen.

In einem Schichtenspeicher tritt ein Temperaturgefälle im Wärmespeichermedium auf. Da das heiße Wärmespeichermedium üblicherweise leichter ist als kaltes Wärmespeichermedium befindet sich im oberen Bereich des Schichtenspeichers heißes Wärmespeichermedium und im unteren Bereich kaltes Wärmespeichermedium. Durch diesen Effekt stabilisiert sich ein Temperaturgefälle im Behälter. Dieser ist im oberen Bereich heiß und im unteren Bereich kalt. Beim Beladen des Wärmespeichermediums wird heißes Wärmespeichermedium im oberen Bereich in den Schichtenspeicher zugeführt. In gleichen Mengen wird kaltes Material am Boden des Schichtenspeichers abgeführt. Entsprechend wird beim Entladen des Wärmespeichers, das heißt zur Nutzung der im Wärmespeicher gespeicherten Wärme am oberen Bereich des Wärmespeichers heißes Wärmespeichermedium entnommen und kaltes Wärmespeichermedium am Boden zugeführt.

Besonders vorteilhaft ist der Einsatz von Schichtenspeichern bei Verwendung von Wärmespeichermedien mit einer kleinen Temperaturleitfähigkeit. Bei Wärmespeichermedien mit großer Temperaturleitfähigkeit erfolgt eine nicht konvektive Wärmeleitung im Schichtenspeicher von heißen Bereichen in kalte Bereiche hinein und es findet ein Temperaturausgleich statt. Bei schlecht wärmeleitenden Materialien ist dieser Effekt nicht stark wirksam, so dass auch über einen längeren Zeitraum eine Temperaturdifferenz in der Vorrichtung zur Speicherung von Wärme erhalten bleibt.

Wenn der Querschnitt der als Schichtenspeicher gestalteten Vorrichtung zur Speicherung von Wärme klein gehalten wird, kann die nutzbare Wärmemenge, die in der Vorrichtung gespeichert wird, hochgehalten werden und damit der Wirkungsgrad verbessert werden. Neben einem kleinen Querschnitt ist dabei eine große Höhe des Behälters vorteilhaft. Die Höhe des Behälters ist jedoch durch den hydrostatischen Druck des Wärmespeichermediums, durch den die Wandung des Behälters belastet wird, begrenzt. Ein entsprechend großes Volumen für das Wärmespeichermedium lässt sich zum Beispiel erzielen, indem mehrere als Schichtenspeicher gestaltete Vorrichtungen zur Speicherung von Wärme in Reihe geschaltet werden. Hierbei ist es besonders vorteilhaft, wenn jeder der in Reihe geschalteten Behälter zur Aufnahme des Wärmespeichermediums mit Mitteln zum Volumenausgleich ausgestattet ist. Wenn ein Pufferbehälter als Mittel zum Volumenausgleich eingesetzt wird, ist es jedoch auch möglich, dass alle in Reihe geschalteten Behälter zur Aufnahme des Wärmespeichermediums mit dem Pufferbehälter verbunden sind.

Die erfindungsgemäße Vorrichtung zur Speicherung von Wärme und das Verfahren zur Speicherung von Wärme eignen sich insbesondere für den Betrieb von Solarkraftwerken. Hierbei wird dem Wärmespeichermedium die im Solarkraftwerk erzeugte Wärme zugeführt. Bei Verwendung eines flüssigen Wärmespeichermediums ist es möglich, dass das Wärmespeichermedium gleichzeitig auch als Wärmeträger eingesetzt wird. Alternativ ist es auch möglich, einen Wärmeträger einzusetzen, der die im Solarkraftwerk erzeugte Wärme aufnimmt und die Wärme dann in einem geeigneten Wärmetauscher an das Wärmespeichermedium abgibt.

Solarkraftwerke, die die erfindungsgemäße Vorrichtung und das erfindungsgemäße Verfahren nutzen können, sind zum Beispiel Parabolrinnensolarkraftwerke.

Um eine ausreichend große Wärmemenge aufnehmen zu können und die Vorrichtung zur Speicherung von Wärme bei einer ausreichend hohen Temperatur, die zum Beispiel zum Betrieb einer Turbine in einem Solarkraftwerk ausreichend ist, betreiben zu können, ist es notwendig, Wärmespeichermedien einzusetzen, die bei den entsprechenden Temperaturen stabil sind. Als Wärmespeichermedien können zum Beispiel Salzschmelzen eingesetzt werden. Salzschmelzen, insbesondere solche, die Kalium oder Lithium enthalten, sind jedoch sehr teuer und führen bei den benötigten großen Mengen zu beträchtlichen Investitionskosten. Zudem könnten aufgrund der großen benötigten Mengen die Ressourcen knapp werden, so dass Alternativen erforderlich sind. Als Alternative können zum Beispiel Wärmespeichermedien eingesetzt werden, die Schwefel enthalten. Schwefel fällt als Abfallprodukt bei der Entschwefelung von Treibstoffen an und ist in großen Mengen zu vergleichsweise niedrigen Kosten zu beschaffen. Als Wärmespeichermedium, das Schwefel enthält, eignet sich insbesondere elementarer Schwefel. Um den Dampfdruck und den Schmelzpunkt anzupassen, ist es vorteilhaft, dem Schwefel mindestens ein Anionen enthaltendes Additiv zuzugeben. Als Anionen enthaltende Additive eignen sich insbesondere solche, die bei der Betriebstemperatur den Schwefel nicht zu entsprechenden Oxidationsprodukten, beispielsweise Schwefeloxide, Schwefelhalogenide oder Schwefeloxidhalogenide oxidieren. Weiterhin ist es vorteilhaft, wenn sich die Anionen enthaltenden Additive gut im Schwefel lösen.

Bevorzugte Anionen enthaltende Additive sind ionische Verbindungen eines Metalls des Periodensystems der Elemente mit einatomigen oder mehratomigen einfach oder mehrfach negativ geladenen Anionen.

Metalle der ionischen Verbindungen sind zum Beispiel Alkalimetalle, vorzugsweise Natrium, Kalium; Erdalkalimetalle, vorzugsweise Magnesium, Calcium, Barium; Metalle der 13. Gruppe des Periodensystems der Elemente, vorzugsweise Aluminium; Übergangsmetalle, vorzugsweise Mangan, Eisen, Cobalt, Nickel, Kupfer, Zink.

Beispiele für derartige Anionen sind: Halogenide und Polyhalogenide, beispielsweise Fluorid, Chlorid, Bromid, Iodid, Triiodid; Chalkogenide und Polychalkogenide, beispielsweise Oxid, Hydroxid, Sulfid, Hydrogensulfid, Disulfid, Trisulfid, Tetrasulfid, Pentasulfid, Hexasulfid, Selenid, Tellurid; Pnicogenide, beispielsweise Amid, Imid, Nitrid, Phosphid, Arsenid; Pseudohalogenide, beispielsweise Cyanid, Cyanat, Thiocyanat; komplexe Anionen, beispielsweise Phosphat, Hydrogenphoshat, Dihydrogenphosphat, Sulfat, Hydrogensulfat, Sulfit, Hydrogensulfit, Thiosulfat, Hexacyanoferrate, Tetrachloroaluminat, Tetrachloroferrat.

Beispiele für Anionen enthaltenden Additive sind: Aluminium(III)-chlorid, Eisen(III)-chlorid, Eisen(II)-sulfid, Natriumbromid, Kaliumbromid, Natriumiodid, Kaliumiodid, Kaliumthiocyanat, Natriumthiocyanat, Dinatriumsulfid (Na₂S), Dinatriumtetrasulfid (Na₂S₄), Dinatriumpentasulfid (Na₂S₅), Dikaliumpentasulfid (K₂S₅), Dikaliumhexasulfid (K₂S₆), Calciumtetrasulfid (CaS₄), Bariumtrisulfid (BaS₃), Dikaliumselenid (K₂Se), Trikaliumphosphid (K₃P), Kaliumhexacyanoferrat (II), Kaliumhexacyanoferrat (III), Kupfer(I)-thiocyanat, Kaliumtriiodid, Cäsiumtriiodid, Natriumhydroxid, Kaliumhydroxid, Cäsiumhydroxid, Natriumoxid, Kaliumoxid, Cäsiumoxid, Kaliumcyanid, Kaliumcyanat, Natriumtetraaluminat, Mangan(II)-sulfid, Cobalt(II)-sulfid, Nickel(II)-sulfid, Kupfer(II)-sulfid, Zinksulfid, Trinatriumphosphat, Dinatriumhydrogenphosphat, Natriumdihydrogenphosphat, Dinatriumsulfat, Natriumhydrogensulfat, Dinatriumsulfit, Natriumhydrogensulfit, Natriumthiosulfat, Trikaliumphosphat, Dikaliumhydrogenphosphat, Kaliumdihydrogenphosphat, Dikaliumsulfat, Kaliumhydrogensulfat, Dikaliumsulfit, Kaliumhydrogensulfit, Kaliumthiosulfat.

Anionen enthaltenden Additive im Sinne dieser Anmeldung sind weiterhin Mischungen von zwei oder mehreren Verbindungen eines Metalls des Periodensystems der Elemente mit einatomigen oder mehratomigen formal einfach oder mehrfach negativ geladenen Anionen, vorzugsweise Anionen aufgebaut aus Nichtmetallatomen. Hierbei ist nach derzeitigem Kenntnisstand das Mengenverhältnis der Einzelkomponenten nicht kritisch.

Vorzugsweise enthält die erfindungsgemäße Mischung elementaren Schwefel im Bereich von 50 bis 99,999 Gew.-%, vorzugsweise im Bereich von 80 bis 99,99 Gew.-%, besonders bevorzugt 90 bis 99,9 Gew.-%, jeweils bezogen auf die Gesamtmasse der erfindungsgemäßen Mischung.

Vorzugsweise enthält die erfindungsgemäße Mischung Anionen enthaltenden Additive im Bereich von 0,001 bis 50 Gew.-%, vorzugsweise im Bereich von 0,01 bis 20 Gew.-%, besonders bevorzugt 0,1 bis 10 Gew.-%, jeweils bezogen auf die Gesamtmasse der erfindungsgemäßen Mischung.

Die erfindungsgemäße Mischung kann weitere Zusatzstoffe enthalten, beispielsweise Additive, die den Schmelzpunkt der Mischung herabsetzen. Der Anteil an weiteren Zusatzstoffen liegt im Allgemeinen im Bereich von 0,01 bis 50 Gew.-%, jeweils bezogen auf die Gesamtmasse der Mischung.

Weiterhin können auch Mischungen von Alkalipolysulfiden der allgemeinen Formel

(M¹ₓM²₍₁₋ₓ₎)₂S_{y}

eingesetzt werden, wobei M¹, M² = Li, Na, K, Rb, Cs bedeuten und M¹ ungleich M² ist sowie 0,05 ≤ x ≤ 0,95 und 2,0 ≤ y ≤ 6,0 sind.

In einer bevorzugten Ausführungsform der Erfindung ist M¹ = K und M² = Na.

In einer weiteren bevorzugten Ausführungsform der Erfindung ist 0,20 ≤ x ≤ 0,95. In einer besonders bevorzugten Ausführungsform der Erfindung ist 0,50 ≤ x ≤ 0,90.

In einer weiteren bevorzugten Ausführungsform der Erfindung ist 3,0 5 ≤ y ≤ 6,0. In einer besonders bevorzugten Ausführungsform der Erfindung ist y = 4,0, 5,0 oder 6,0.

In einer besonders bevorzugten Ausführungsform der Erfindung ist M¹ = K, M² = Na, 0,20 ≤ x ≤ 0,95 und 3,0 ≤ y ≤ 6,0.

In einer ganz besonders bevorzugten Ausführungsform der Erfindung ist M¹ = K, M² = Na, 0,50 ≤ x ≤ 0,90 und y = 4,0, 5,0 oder 6,0.

Ebenfalls geeignet sind Mischungen von Alkalipolysulfiden und Alkalithiocyanaten gemäß der allgemeinen Formel

((M¹ₓM²₍₁₋ₓ₎)₂S_{y})ₘ(M³_{z}M⁴_{(1-z)}SCN)₍₁₋ₘ₎

wobei M¹, M², M³, M⁴ = Li, Na, K, Rb, Cs bedeuten und M¹ ungleich M², M³ ungleich M⁴ ist sowie 0,05 ≤ x ≤ 1, 0,05 ≤ z ≤ 1, 2,0 ≤ y ≤ 6,0 und m der Stoffmengenanteil mit 0,05 ≤ m ≤ 0,95 sind.

In einer bevorzugten Ausführungsform der Erfindung ist M¹ und M³ = K und M² und M⁴ = Na.

In einer weiteren bevorzugten Ausführungsform der Erfindung ist 0,20 ≤ x ≤ 1. In einer besonders bevorzugten Ausführungsform der Erfindung ist 0,50 ≤ x 5 1.

In einer weiteren bevorzugten Ausführungsform der Erfindung ist 3,0 ≤ y ≤ 6,0. In einer besonders bevorzugten Ausführungsform der Erfindung ist y = 4,0, 5,0 oder 6,0.

In einer weiteren bevorzugten Ausführungsform der Erfindung ist 0,20 ≤ z ≤ 1. In einer besonders bevorzugten Ausführungsform der Erfindung ist 0,50 ≤ z ≤ 1.

In einer weiteren bevorzugten Ausführungsform der Erfindung ist 0,20 ≤ m ≤ 0,80. In einer besonders bevorzugten Ausführungsform der Erfindung ist 0,33 ≤ m ≤ 0,80.

In einer besonders bevorzugten Ausführungsform der Erfindung ist M¹ und M³ = K, M² und M⁴ = Na, 0,20 ≤ x ≤ 1, 0,20 ≤ z ≤ 0,95, 3,0 ≤ y ≤ 6,0 und 0,20 ≤ m ≤ 0,95. In einer ganz besonders bevorzugten Ausführungsform der Erfindung ist M¹ und M³ = K, M² und M⁴ = Na, 0,50 ≤ x ≤ 1, 0,50 ≤ z ≤ 0,95, y = 4,0, 5,0 oder 6,0 und 0,33 ≤ m ≤ 0,80.

In einer weiteren besonders bevorzugten Ausführungsform der Erfindung ist M¹ und M³ = K, x = 1, z = 1, y = 4,0, 5,0 oder 6,0 und 0,33 ≤ m ≤ 0,80.

In einer weiteren besonders bevorzugten Ausführungsform der Erfindung ist M¹ und M³ = K, x = 1, z = 1, y = 4 und m = 0,5.

In einer weiteren besonders bevorzugten Ausführungsform der Erfindung ist M¹ und M³ = K, x = 1, z = 1, y = 5 und m = 0,5.

In einer weiteren besonders bevorzugten Ausführungsform der Erfindung ist M¹ und M³ = K, x = 1, z = 1, y = 6 und m = 0,5.

Wärmespeichermedien, die oxidationsempfindlich sind und einen hohen Dampfdruck aufweisen, werden besonders vorteilhaft in einem Schichtenspeicher betrieben.

Bei Einsatz eines Pufferbehälters für den Volumenausgleich ist es bevorzugt, den Pufferbehälter kalt zu betreiben und mit einem Inertgas zu überdecken, wenn ein Wärmespeichermedium mit einem nicht vernachlässigbaren Dampfdruck eingesetzt wird. Durch den kalten Betrieb des Pufferbehälters wird weitgehend vermieden, dass Wärmespeichermedium im Pufferbehälter verdampft. Kaltes Betreiben des Pufferbehälters bedeutet in diesem Fall, dass die Temperatur im Pufferbehälter weit unterhalb der Siedetemperatur des Wärmespeichermediums liegt. Durch den kalten Betrieb des Pufferbehälters ist es möglich, auf aufwändige Einrichtungen zur Abtrennung von eindringendem gasförmigem Wärmespeichermedium in das Abgas zu verzichten oder diese stark vereinfacht zu gestalten.

Insbesondere ist es notwendig, dass die Phasengrenze im Pufferbehälter auf einer Temperatur weit unterhalb der Siedetemperatur des Wärmespeichermediums gehalten wird. "Weit unterhalb der Siedetemperatur" bedeutet im Rahmen der vorliegenden Erfindung, dass die Temperatur maximal 70 %, bevorzugt maximal 60 % der Siedetemperatur in Kelvin beträgt.

Eine kalte Phasengrenze im Pufferbehälter kann zum Beispiel dadurch erzielt werden, dass bei einer Reihenschaltung von mehreren Schichtenspeichern jeweils vollständig gefüllte Behälter genutzt werden und der letzte Behälter, in dem das Wärmespeichermedium mit der niedrigsten Temperatur enthalten ist, als Pufferbehälter genutzt wird. Alternativ ist es auch möglich, mehrere Pufferbehälter vorzusehen, die jeweils bis auf den letzten Pufferbehälter vollständig gefüllt sind. Vorteil des Einsatzes von mehreren in Reihe geschalteten Pufferbehältern, bei denen der letzte Pufferbehälter die Phasengrenze zum Gas enthält, ist, dass Wärmeverlust aus dem Behälter gering gehalten werden kann. Die Größe des Pufferbehälters wird abhängig vom Ausdehnungskoeffizienten des Wärmespeichermediums und der Arbeitstemperaturdifferenz in Abhängigkeit vom eingesetzten Wärmespeichermedium gewählt. Bei Einsatz von Schwefel enthaltenden Wärmespeichermedien und Arbeitstemperaturen zwischen 290°C und 390 °C beträgt die Größe des Pufferbehälters zum Beispiel mindestens 3,5 Hundertstel des Volumens des Behälters zur Aufnahme des Wärmespeichermediums.

Bei Einsatz von Pufferbehältern ist es möglich, dass beim Eindringen von heißem Wärmespeichermedium in einen kühleren Pufferbehälter das heiße spezifisch leichtere Wärmespeichermedium durch Konvektion in obere Bereiche gelangen kann und die Ausbildung einer kalten Phasengrenze verhindert. Die störende Konvektion kann zum Beispiel dadurch verhindert werden, dass jeweils das heiße Wärmespeichermedium im oberen Bereich eines Pufferbehälters zugeführt bzw. abgeführt wird und kaltes Wärmespeichermedium jeweils im unteren Bereich des Pufferbehälters zu- bzw. abgeführt wird. Hierbei ist es einerseits möglich, voneinander getrennte Pufferbehälter vorzusehen oder alternativ Einbauten in einem Pufferbehälter vorzusehen, die jeweils Öffnungen im unteren Bereich enthalten, um einen Transport von kaltem Wärmespeichermedium zu erlauben oder alternativ im oberen Bereich, um einen Transport von warmem Wärmespeichermedium zu erlauben. Insbesondere für die Verbindung in den Pufferbehälter, in dem die kalte Phasengrenze existiert, ist es vorteilhaft, Zu- und Ablauf im unteren Bereich vorzusehen und die Verbindung in den unteren Bereich des vorgeschalteten Pufferbehälters zu führen. Hierdurch wird kühles Wärmespeichermedium aus dem vorhergehenden Pufferbehälter in den Pufferbehälter mit der Phasengrenze geleitet bzw. kaltes Wärmespeichermedium aus dem Pufferbehälter mit der Phasengrenze in den vorhergehenden Pufferbehälter geführt.

Wenn eine Abkühlung nicht ausreichend ist, um eine Temperatur der Phasengrenze zu erzielen, bei der eine Verdampfung des Wärmespeichermediums vermieden werden kann, ist es auch möglich, beispielsweise einen innenliegenden Wärmetauscher vorzusehen, mit dem das Wärmespeichermedium im Pufferbehälter mit der Phasengrenze gekühlt werden kann. Auf diese Weise lässt sich ein Verdampfen von Wärmespeichermedium vermindern.

In einer weiteren bevorzugten Ausführungsform wird der Pufferbehälter so angeordnet, dass die Phasengrenzfläche im Pufferbehälter in einer ähnlichen hydrostatischen Höhe ist wie die Flüssigkeitsoberfläche im Behälter zur Aufnahme des Wärmespeichermediums. Hierdurch wirken auch bei einem Stillstand der Zu- bzw. Abfuhrpumpen nur geringe hydrostatische Kräfte auf den Behälter zur Aufnahme des Wärmespeichermediums und den Pufferbehälter. Zudem wird nur ein minimaler Aufwand an Energie zum Betrieb der Pumpen benötigt, da in beide Richtungen, das heißt sowohl zur Zufuhr von Wärmespeichermedium aus dem Pufferbehälter in den Behälter als auch aus dem Behälter in den Pufferbehälter auch der hydrostatische Druck des Wärmespeichermediums wirkt.

In einer weiteren vorteilhaften Ausgestaltung ist der Pufferbehälter mit einer großen Querschnittsfläche gestaltet. Durch die große Querschnittsfläche bewirken durch Temperaturänderung unvermeidliche Volumenänderungen des Wärmespeichermediums nur eine kleine Änderung der hydrostatischen Höhe der Flüssigkeitsoberfläche im Pufferbehälter. Hierdurch können die Folgen der wirkenden hydrostatischen Kräfte gering gehalten werden.

Ausführungsbeispiele der Erfindung werden im Folgenden anhand der Figuren dargestellt und in der nachfolgenden Beschreibung näher erläutert.

Es zeigen:
- Figur 1.1: einen Behälter zur Aufnahme eines Wärmespeichermediums mit flexibler Abdeckung mit kaltem Wärmespeichermedium,
- Figur 1.2: einen Behälter zur Aufnahme eines Wärmespeichermediums mit einer flexiblen Abdeckung mit heißem Wärmespeichermedium,
- Figur 2: einen Behälter zur Aufnahme eines Wärmespeichermediums mit flexibler Abdeckung mit Tauchpumpe in einer ersten Ausführungsform,
- Figur 3: einen Behälter zur Aufnahme eines Wärmespeichermediums mit flexibler Abdeckung mit Tauchpumpe in einer zweiten Ausführungsform,
- Figur 4: eine Vorrichtung zur Speicherung von Wärme mit Pufferbehälter,
- Figur 5: Behälter zur Aufnahme eines Wärmespeichermediums als Reihenschichtenspeicher,
- Figur 6: einen Behälter zur Aufnahme eines Wärmespeichermediums, der als Schichtenspeicher gestaltet ist,
- Figur 7: einen Sammler, wie er in einem Schichtenspeicher gemäß Figur 6 eingesetzt wird, in Draufsicht,
- Figur 8: zwei in Reihe geschaltete Pufferbehälter,
- Figur 9: einen Behälter zur Aufnahme eines Wärmespeichermediums, der einteilig mit einem Pufferbehälter kombiniert ist,
- Figur 10: einen Behälter zur Aufnahme eines Wärmespeichermediums mit Pufferbehältern in einer weiteren Ausführungsform.

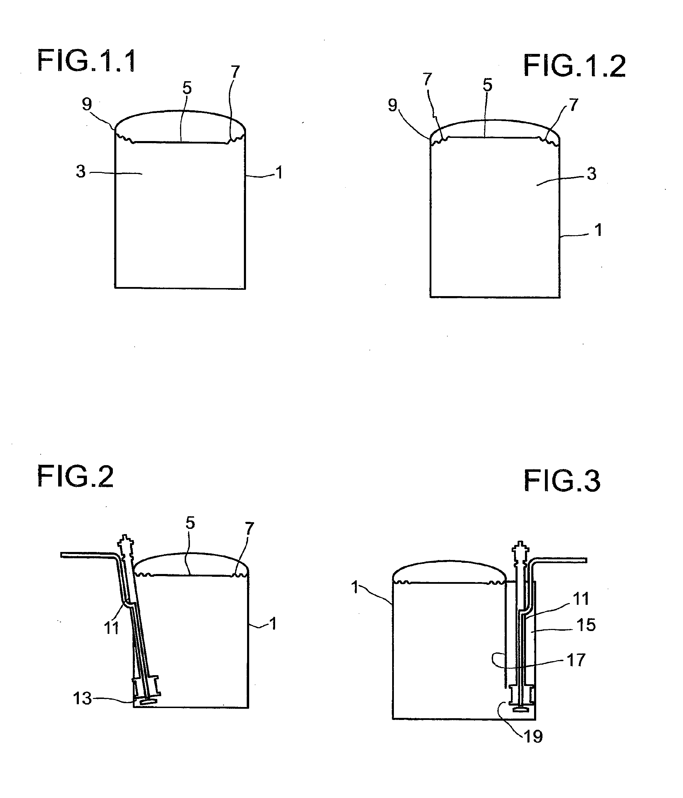

In Figur 1.1 ist ein Behälter zur Aufnahme eines Wärmespeichermediums mit flexibler Abdeckung mit kaltem Wärmespeichermedium dargestellt. Ein Behälter 1 ist mit einem Wärmespeichermedium 3 befüllt. Als Wärmespeichermedium eignet sich jedes beliebige Medium, welches Wärme aufnehmen und speichern kann. Üblicherweise eingesetzte Wärmespeichermedien sind zum Beispiel Salzschmelzen. Besonders bevorzugt eignet sich der in der Figur 1 dargestellte Behälter zur Aufnahme eines Schwefel enthaltenden Wärmespeichermediums.

Nachdem das Wärmespeichermedium Wärme zum Beispiel zum Betrieb eines Solarkraftwerks, abgegeben hat, hat dieses eine niedrigere Temperatur als nach der Aufnahme von Wärme, die vom Wärmespeichermedium gespeichert werden soll. Das abgekühlte Wärmespeichermedium 3 hat dabei ein geringeres Volumen als das erwärmte Wärmespeichermedium 3, wie es in Figur 1.2 dargestellt ist.

Um zu vermeiden, dass ein zu großer Überdruck im Behälter entsteht, ist es vorteilhaft, wenn kein oder nur eine geringe Menge an Gas im Behälter enthalten ist. Hierzu wird der Behälter 1 mit einer Abdeckung 5 abgedeckt. Ein weiterer Effekt der Abdeckung 5, insbesondere bei oxidationsempfindlichen Wärmespeichermedien 3, ist, das eine Reaktion des Wärmespeichermediums 3 mit Gas, das in einer Atmosphäre oberhalb des Sammelspeichermediums 3 enthalten ist, vermieden wird. Zwischen der Abdeckung 5 und dem Wärmespeichermedium 3 ist vorzugsweise kein Spalt ausgebildet.

Um Volumenschwankungen des Wärmespeichermediums 3 auszugleichen, ist die Abdeckung 5 flexibel gestaltet. Hierzu sind zum Beispiel wie in den Figuren 1.1 und 1.2 dargestellt flexible Bereiche 7 an der Abdeckung 5 ausgebildet. Alternativ zu der in Figur 1.1 und 1.2 dargestellten Ausführungsform ist es auch möglich, die gesamte Abdeckung 5 flexibel zu gestalten. Die flexiblen Bereiche 7 können zum Beispiel in Form eines Kompensators, beispielsweise in Form eines Balgens, gestaltet sein. Mit dem flexiblen Bereich 7 ist die Abdeckung 5 in der Figur 1.1 und 1.2 dargestellten Ausführungsform an der Wandung 9 des Behälters 1 befestigt. Die Befestigung der Abdeckung 5 mit den flexiblen Bereichen 7 an der Wandung 9 des Behälters 1 erfolgt dabei vorzugsweise formschlüssig, zum Beispiel durch ein Schweißverfahren. Hierdurch wird vermieden, dass über Leckagen zwischen der Wandung 9 des Behälters 1 und der Abdeckung 5 Wärmespeichermedium 3 austreten kann oder Gas in den Behälter 1 eindringen kann.

Aufgrund der flexiblen Bereiche 7 kann die Abdeckung 5 sowohl bei kaltem Wärmespeichermedium 3, wie es in Figur 1.1 dargestellt ist als auch bei heißem Wärmespeichermedium 3, wie er in Figur 1.2 dargestellt ist, bündig auf dem Wärmespeichermedium 3 aufliegen. Durch die Ausdehnung aufgrund der Aufheizung des Wärmespeichermediums 3 wird die Abdeckung 5 vom Wärmespeichermedium 3 angehoben. Die flexiblen Bereiche 7 ermöglichen das Anheben der Abdeckung 5 ohne dass die Dichtigkeit des Behälters 1 beeinträchtigt wird.

Damit das Wärmespeichermedium 3 Wärme aufnehmen kann, ist es zum Beispiel möglich, das Wärmespeichermedium 3 aus dem Behälter 1 zu entnehmen und über einen Wärmetauscher zu führen, in dem das Wärmespeichermedium 3 Wärme aufnimmt. Anschließend kann das Wärmespeichermedium 3 wieder in den Behälter 1 eingebracht werden. Hierdurch ist kontinuierlich eine gleiche Masse an Wärmespeichermedium 3 im Behälter 1 enthalten. Entsprechend wird zur Wärmeabgabe von Wärmespeichermedium 3 über den Wärmetauscher Wärme an ein anderes Medium abgegeben.

Zur Aufnahme von Wärme ist es auch möglich, dass das Wärmespeichermedium 3 zum Beispiel in ein Solarfeld eines Solarkraftwerks geleitet wird und in diesem Wärme aufnimmt.

Alternativ ist es auch möglich, dass zum Beispiel im Behälter 1 ein Wärmetauscher aufgenommen ist, über den Wärme an das Wärmespeichermedium abgegeben werden kann oder über den das Wärmespeichermedium 3 Wärme an einen den Wärmetauscher durchströmenden Wärmeträger abgeben kann.

Wenn das Wärmespeichermedium 3 zu einem Wärmetauscher, der außerhalb des Behälters 1 positioniert ist, transportiert wird, wird hierzu zum Beispiel eine Tauchpumpe eingesetzt. Eine mögliche Positionierung einer Tauchpumpe ist in den Figuren 2 und 3 dargestellt. Figur 2 zeigt dabei einen Behälter zur Aufnahme eines Wärmespeichermediums mit flexibler Abdeckung mit einer Tauchpumpe in einer ersten Ausführungsform.

Der Behälter 1 entspricht dabei in seinem Aufbau dem in den Figuren 1.1 und 1.2 dargestellten Behälter.

Um ein störungsfreies Bewegen der Abdeckung 5 zu ermöglichen, wird eine Tauchpumpe 11 über die seitliche Wandung 9 in den Behälter 1 geführt. Die Tauchpumpe 11 ist dabei so gestaltet, dass der Saugbereich 13 der Tauchpumpe 11 am Sumpf des Behälters 1 positioniert ist. Mit Hilfe der Tauchpumpe 11 kann nun Wärmespeichermedium 3 aus dem Behälter 1 entnommen werden.

In Figur 3 ist ein Behälter zur Aufnahme eines Wärmespeichermediums mit flexibler Abdeckung mit Tauchpumpe in einer zweiten Ausführungsform dargestellt.

Im Unterschied zu der in Figur 2 dargestellten Ausführungsform ist bei der in Figur 3 dargestellten Ausführungsform eine Kammer 15 seitlich am Behälter 1 angebracht. Die Tauchpumpe 11 befindet sich dabei in der Kammer 15. Dies hat den Vorteil, dass die Tauchpumpe 11 nicht die Wandung 9 des Behälters 1 durchbrechen muss.

Über einen in Figur 2 und Figur 3 nicht dargestellten Zulauf wird dann in gleicher Menge Wärmespeichermedium in den Behälter 1 zurückgeleitet, damit eine konstante Masse an Wärmespeichermedium im Behälter 1 enthalten ist.

Um die Kammer 15 mit Wärmespeichermedium 3 zu füllen und damit Wärmespeichermedium aus dem Behälter 1 mit Hilfe der Tauchpumpe 11 entnehmen zu können, ist vorzugsweise im unteren Bereich der Behälterwandung 17, die die Kammer 15 vom Behälter 1 trennt, eine Öffnung 19 ausgebildet, durch die Wärmespeichermedium 3 aus dem Behälter 1 in die Kammer 15 strömen kann. Mit Hilfe der Tauchpumpe 11 kann dann Wärmespeichermedium aus dem Behälter 1 entnommen werden und über einen auch in Figur 3 nicht dargestellten Zulauf erwärmtes oder abgekühltes Wärmespeichermedium dem Behälter 1 zugeführt werden, um die Masse an Wärmespeichermedium 3 im Behälter 1 konstant zu halten. Das abgekühlte oder aufgewärmte Wärmespeichermedium wird dem Behälter 1 dabei vorzugsweise im oberen Bereich zugeführt.

Durch die Anordnung der Tauchpumpe 11, wie sie in den Figuren 2 und 3 dargestellt ist, ist es möglich, die Tauchpumpe 11 so anzuordnen, dass diese die Abdeckung 5 bei einem Volumenausgleich des Wärmespeichermediums 3 im Behälter 1 nicht behindert.

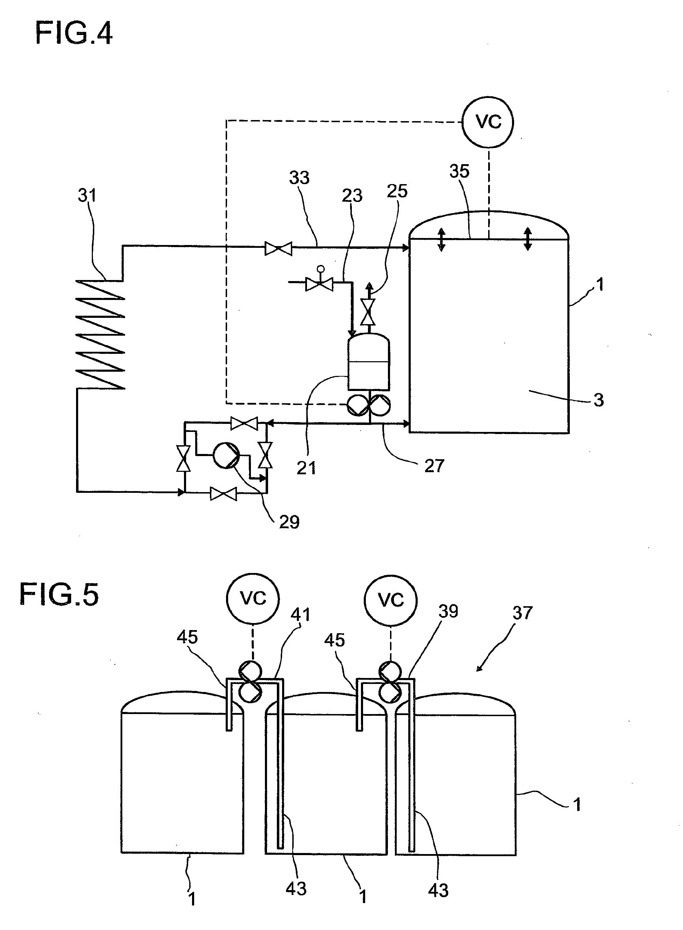

In Figur 4 ist eine Vorrichtung zur Speicherung von Wärme mit Pufferbehälter dargestellt.

Alternativ zu der in den Figuren 1.1 bis 1.2 dargestellten Ausführungsform, in der der Behälter 1 mit einer Abdeckung 5 mit flexiblen Bereichen 7 abgedeckt ist, so dass durch die Abdeckung 5 Volumenschwankungen des Wärmespeichermediums 3 ausgeglichen werden können, ist es auch möglich, einen Pufferbehälter 21 vorzusehen. Zum Ausgleich von Volumenschwankungen wird bei einer Volumenzunahme des Wärmespeichermediums ein Teil des Wärmespeichermediums in den Pufferbehälter 21 geleitet. Hierdurch ist es möglich, im Behälter 1 ein konstantes Volumen an Wärmespeichermedium 3 zu halten. Im Pufferbehälter 21 ist es zum Beispiel möglich, eine flexible Abdeckung, wie sie in den Figuren 1.1 bis 3 dargestellt ist, vorzusehen, um Füllunterschiede, die sich aufgrund der Volumenänderung des Wärmespeichermediums ergeben, auszugleichen. Alternativ und bevorzugt ist es jedoch, eine Gasabdeckung im Pufferbehälter 21 vorzusehen. Hierzu wird bei einer Füllmengenabnahme im Pufferbehälter 21 ein Gas über eine Gaszuleitung 23 in den Pufferbehälter 21 geleitet. Das Gas, das in den Pufferbehälter 21 geleitet wird, ist dabei ein gegenüber dem Wärmespeichermedium 3 inertes Gas, um eine Reaktion des Gases mit dem Wärmespeichermedium 3 zu verhindern. Als Gas eignet sich insbesondere Stickstoff. Jedoch können zum Beispiel auch Edelgase verwendet werden. Bevorzugt ist jedoch der Einsatz von Stickstoff. Die Zu- und Abfuhreinrichtungen der Gase können Bestandteil einer Regelstrecke sein, die den Gasdruck im Pufferspeicher und/oder das Volumen in Behälter 1 konstant hält.

Wenn aufgrund einer Volumenzunahme des Wärmespeichermediums Wärmespeichermedium in den Pufferbehälter 21 geleitet wird und so der Füllstand im Pufferbehälter 21 zunimmt, wird Gas aus dem Pufferbehälter 21 über eine Gasabfuhr 25 entnommen. Hierbei ist es einerseits möglich, dass das Gas an die Umgebung abgegeben wird, wie es bei Verwendung von Stickstoff bevorzugt ist, oder alternativ in einen Gasspeicher geleitet wird. Insbesondere bei von Stickstoff verschiedenen Gasen ist die Rückführung in einen Gasspeicher bevorzugt.

Um Wärme zu speichern wird dem Behälter 1 über eine untere Leitung 27, die sich im Bereich des Bodens des Behälters 1 befindet, Wärmespeichermedium entnommen. Zur Entnahme des Wärmespeichermediums wird eine Pumpe 29 eingesetzt. Über die Pumpe 29 wird das Wärmespeichermedium in einen Wärmetauscher 31 geleitet. Im Wärmetauscher 31 nimmt das Wärmespeichermedium 3 Wärme auf. Anschließend wird das so erwärmte Wärmespeichermedium 3 über eine obere Leitung 33 zurück in den Behälter 1 geleitet. Im Behälter 1 stellt sich dabei ein Temperaturgefälle ein, wobei heißes Wärmespeichermedium 3 im oberen Bereich und kaltes Wärmespeichermedium im unteren Bereich des Behälters 1 ist. Die obere Leitung 33 führt dabei im oberen Bereich des Behälters 1 in den Behälter, bevorzugt direkt unterhalb einer Abdeckung 35, die den Behälter oben begrenzt.

Um dem Wärmespeicher wieder Wärme entnehmen zu können, wird das Wärmespeichermedium 3 über die obere Leitung 33 aus dem Behälter 1 entnommen und in den Wärmetauscher 31 geführt. Im Wärmetauscher 31 gibt das Wärmespeichermedium dann Wärme zum Beispiel an einen Wärmeträger ab. Hierbei kühlt sich das Wärmespeichermedium 3 ab. Das abgekühlte Wärmespeichermedium wird dann mit Hilfe der Pumpe 29 über die untere Leitung 27 zurück in den Behälter 1 geleitet. Alternativ zu der hier dargestellten Ausführungsform, bei der über den gleichen Kreislauf Wärme zugeführt wird oder Wärme abgeführt wird ist es auch möglich, einen ersten Wärmetauscher vorzusehen, über den das Wärmespeichermedium 3 beheizt wird und einen zweiten Wärmetauscher, in dem das Wärmespeichermedium 3 wieder Wärme abgibt. Hierzu ist dann zum Beispiel ein zweiter Kreislauf einsetzbar.

Aufgrund der Zufuhr des heißen Wärmespeichermediums in den oberen Bereich des Behälters 1 und der Abfuhr des kalten Wärmespeichermediums aus dem unteren Bereich bildet sich eine Wärmeschichtung aus, so dass die Vorrichtung als Schichtenspeicher ausgebildet ist.

In Figur 5 sind Behälter zur Aufnahme eines Wärmespeichermediums als Reihenschichtenspeicher dargestellt.

Alternativ zu der in Figur 4 dargestellten Ausführungsform mit nur einem Behälter ist es auch möglich, zum Beispiel einen Reihenschichtenspeicher einzusetzen. Ein Reihenschichtenspeicher kann beliebig viele Behälter umfassen. In der in Figur 5 dargestellten Ausführungsform umfasst der Reihenschichtenspeicher 37 drei Behälter. Durch den Einsatz von Reihenschichtenspeichern 37 ist es möglich, die Querschnittsfläche zu verringern. Auf diese Weise können Verluste, die sich durch Wärmeleitung innerhalb des Wärmespeichermediums ergeben, weiter verringert werden. So nimmt zum Beispiel der Verlust an nutzbarer Wärme mit zunehmender Höhe des Behälters ab. Die zunehmende Höhe des Behälters kann durch den Reihenschichtenspeicher 37 simuliert werden. Der Einsatz des Reihenschichtenspeichers hat den Vorteil, dass die einzelnen Behälter nicht so hoch gestaltet werden müssen und somit einen geringerer Druck, insbesondere in unteren Bereichen auf die Wandung des Behälters wirkt. Der Behälter kann somit in einer geringeren Stabilität hergestellt werden.

Zum Betrieb eines Reihenschichtenspeichers werden die einzelnen Behälter 1 über Leitungen 39, 41 miteinander verbunden. Dabei ragt ein erster Leitungsabschnitt 43 jeweils in den Bereich des Bodens des Behälters 1, der das wärmere Wärmespeichermedium enthält und ein zweiter Leitungsabschnitt 45 in den oberen Bereich des Behälters 1, der das etwas kältere Wärmespeichermedium enthält. Dabei ist es insbesondere vorteilhaft, wenn die Temperatur des Wärmespeichermediums im unteren Bereich des Behälters, der das wärmere Wärmespeichermedium 3 enthält, in etwa gleich ist wie die Temperatur des Wärmespeichermediums 3 im oberen Bereich des Behälters 1, in dem das etwas kältere Wärmespeichermedium ist. Durch die Hintereinanderschaltung von zwei oder mehr Behältern 1 ist die Temperaturdifferenz zwischen dem oberen Bereich und dem Boden des Behälters geringer als wenn nur ein Behälter eingesetzt wird.

Um einen Reihenschichtenspeicher 37 betreiben zu können, wird heißes Wärmespeichermedium im oberen Bereich des heißesten Behälters zugeführt und kaltes Wärmespeichermedium am Boden des kältesten Behälters entnommen bzw. kaltes Wärmespeichermedium am Boden des kältesten Behälters zugeführt und heißes Wärmespeichermedium im oberen Bereich des wärmsten Behälters entnommen. In gleichem Maße, in dem Wärmespeichermedium aus einem der Behälter des Reihenschichtenspeichers 37 entnommen wird, wird über die Leitungen 39, 41 Wärmespeichermedium von einem Behälter in den benachbarten Behälter gepumpt, um Volumenänderungen in den Behältern 1 auszugleichen.

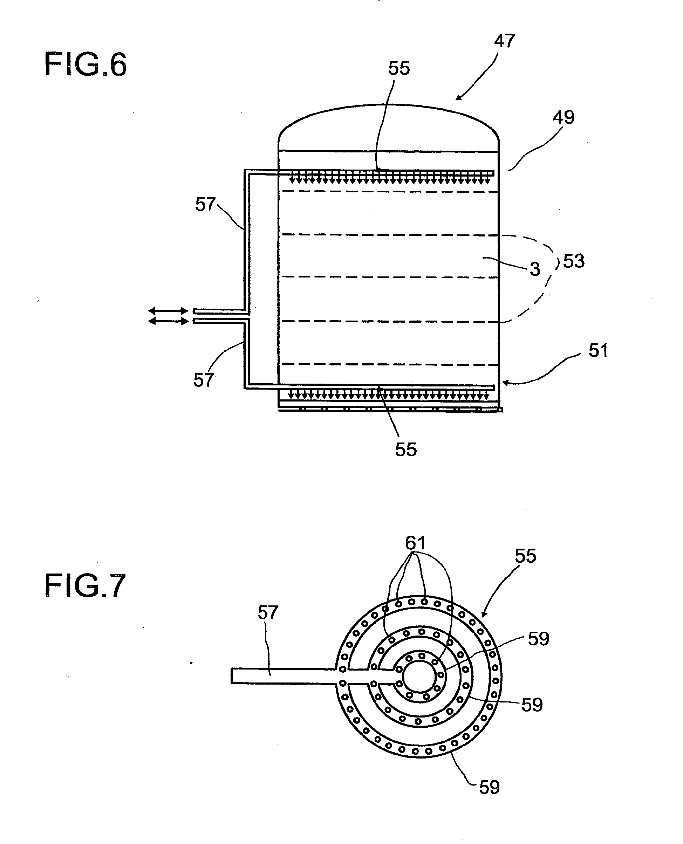

In Figur 6 ist ein Behälter zur Aufnahme eines Wärmespeichermediums dargestellt, der als Schichtenspeicher gestaltet ist. In einem als Schichtenspeicher 47 gestalteten Behälter zur Aufnahme eines Wärmespeichermediums 3 befindet sich, wie vorstehend bereits beschrieben, im oberen Bereich 49 des Behälters heißes Wärmespeichermedium 3 und im unteren Bereich 51 kälteres Wärmespeichermedium. Im Schichtenspeicher 47 bilden sich Temperaturgrenzen 53 aus, die bei Entnahme von kaltem Wärmespeichermedium und Zufuhr von heißem Wärmespeichermedium nach unten wandern und bei Entnahme von heißem Wärmespeichermedium und Zufuhr von kaltem Wärmespeichermedium nach oben. Um zu vermeiden, dass eine Konvektion beim Zuführen von Wärmespeichermedium in den Behälter 1 auftritt, werden geeignete Sammler/Verteiler 55 eingesetzt. Bei Entnahme von heißem Wärmespeichermedium wirkt der obere Sammler/Verteiler 55 als Sammler zur Entnahme von Wärmespeichermedium und der untere Sammler/Verteiler 55 als Verteiler, über den Wärmespeichermedium in den Behälter 1 zugeführt wird. Entsprechend dient der untere Sammler/Verteiler 55 bei Entnahme von kaltem Wärmespeichermedium als Sammler und der obere Sammler/Verteiler 55 als Verteiler. Die Sammler/Verteiler 55 sind dabei jeweils mit einer Leitung 57 verbunden, die zum Beispiel zu einem Wärmetauscher führt.

Eine geeignete Form für einen Sammler/Verteiler ist in Figur 7 dargestellt. In der hier dargestellten Ausführungsform umfasst der Sammler/Verteiler 55 drei konzentrische Ringe 59, die jeweils an einer Stelle mit der Leitung 57 verbunden sind. Neben der Gestaltung mit drei konzentrischen Ringen 59, wie sie in Figur 7 dargestellt ist, können auch mehr als 3 oder weniger als 3 Ringe vorgesehen sein. Auch beliebige andere Gestaltungen, die eine gleichmäßige Zufuhr bzw. Entnahme von Wärmespeichermedium erlauben, sind möglich.

Um gleichmäßig Wärmespeichermedium zuführen zu können bzw. entnehmen zu können, sind in jedem der konzentrischen Ringe 59 Öffnungen 61 ausgebildet. Über die Öffnungen 61 kann das Wärmespeichermedium entweder aus dem Behälter 1 entnommen werden oder in den Behälter 1 zugeführt werden.

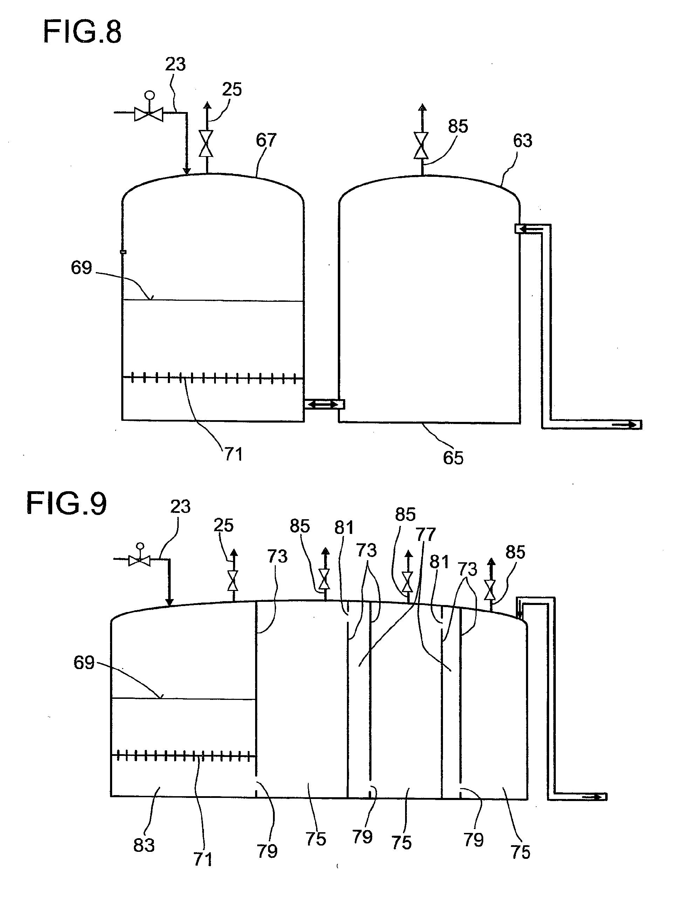

Neben der Ausführungsform mit nur einem Pufferbehälter, wie sie in Figur 4 dargestellt ist, ist es alternativ auch möglich, mehr als einen Pufferbehälter, zum Beispiel zwei Pufferbehälter vorzusehen. Dies ist beispielhaft in Figur 8 dargestellt. Neben der Ausführungsform mit zwei Pufferbehältern, wie sie in Figur 8 dargestellt ist, können auch mehr als zwei Pufferbehälter in Reihe geschaltet werden. Der Vorteil von mindestens zwei Pufferbehältern ist, dass bei Zufuhr von heißem Wärmespeichermedium in einen ersten Pufferbehälter 63 keine Konvektion von heißem Wärmespeichermedium an die kalte Phasengrenze erfolgen kann, wodurch die Ausbildung einer kalten Phasengrenze verhindert würde. Um eine störende Konvektion zu verhindern, ist es vorteilhaft, wenn wie in Figur 8 dargstellt das heiße Wärmespeichermedium im oberen Bereich des ersten Pufferbehälters 63 zugeführt wird. Innerhalb des ersten Pufferbehälters 63 nimmt die Temperatur zum Boden 65 hin ab. Das kalte Wärmespeichermedium vom Boden 65 des ersten Pufferbehälters 63 wird dann in einen zweiten Pufferbehälter 67 geführt. Im zweiten Pufferbehälter 67 bildet sich eine kalte Phasengrenze 69 aus. Die Ausbildung der kalten Phasengrenze 69 kann durch Einsatz eines Wärmetauschers 71 im zweiten Pufferbehälter 67 unterstützt werden. Durch den Einsatz des Wärmetauschers 71 ist es möglich, im zweiten Pufferbehälter 67 die Temperatur tief zu halten und damit auch den Dampfdruck im Pufferbehälter 67 möglichst gering zu halten.

Alternativ ist es weiterhin möglich, wie in Figur 9 dargestellt, nur einen Behälter vorzusehen, der durch Einbauten 73 in einzelne Bereiche getrennt ist. Durch die Einbauten 73, die vorzugsweise als senkrechte Wandungen innerhalb des Behälters gestaltet sind, wird der Behälter in einzelne Bereiche mit unterschiedlicher Temperatur geteilt. Dabei ist es insbesondere vorteilhaft, wenn jeweils zwischen zwei Bereichen 77 mit einer Temperaturschichtung ein im Wesentlichen isothermer Bereich 77 ausgebildet ist. Der isotherme Bereich 77 ist jeweils in der Nähe des Bodens mit einer Öffnung 79 zum wärmeren Bereich 75 mit Temperaturschichtung und einer oberen Öffnung 81 zum kälteren Bereich 75 mit Temperaturschichtung versehen. Der kälteste Bereich 75 mit Temperaturschichtung ist über eine Öffnung 79 mit einer kalten Zone 83, in der sich die Phasengrenze 69 befindet, verbunden. Wie in der in Figur 8 dargestellten Ausführungsform im zweiten Pufferbehälter 67 kann in der kalten Zone 83 ein Wärmetauscher 71 aufgenommen sein, um die Phasengrenze 69 auf im Wesentlichen konstanter Temperatur zu halten. Die Wandungen 73 können auch isolierend ausgeführt sein. Um gegebenenfalls im Wärmespeichermedium enthaltenes Gas entnehmen zu können, sind die einzelnen Bereiche 75 jeweils mit einer Entlüftung 85 versehen.

Eine entsprechende Entlüftung 85 weist vorzugsweise auch der erste Pufferbehälter 63 der in Figur 8 dargestellten Ausführungsform auf.

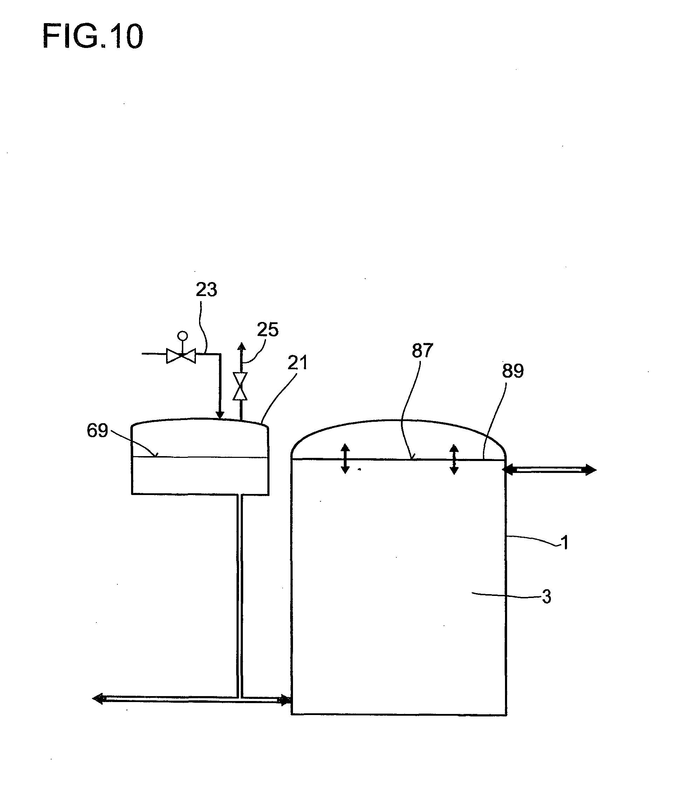

Ein Behälter zur Aufnahme eines Wärmespeichermediums mit Pufferbehältern in einer zweiten Ausführungsform ist in Figur 10 dargestellt.

Im Unterschied zu der in Figur 4 dargestellten Ausführungsform ist in der in Figur 10 dargestellten Ausführungsform der Pufferbehälter 21 so positioniert, dass die Phasengrenze 69 im Pufferbehälter auf ähnlicher hydrostatischer Höhe liegt wie die Phasengrenze 87 des Wärmespeichermediums 3 im Behälter 1. Um mögliche Volumenschwankungen im Behälter 1 ausgleichen zu können, ist das Wärmespeichermedium 3 vorzugsweise mit einer Abdeckung 89 abgedeckt. Die Abdeckung 89 ist dabei gasdicht mit dem Behälter 1 verbunden. Mit den Pfeilen in Figur 10 sind kleine Bewegungen innerhalb der Elastizitätsgrenzen der Abdeckung 89 symbolisiert, die erfasst werden und über eine Volumenregelung, indem Wärmespeichermedium in den Pufferbehälter 21 geleitet wird oder aus dem Pufferbehälter 21 in den Behälter 1 geleitet wird, rückgeführt werden. Hierzu wird bei Erfassung eines Anhebens der Abdeckung 89 Wärmespeichermedium aus dem Behälter 1 in den Pufferbehälter 21 geleitet und bei einem Absenken der Abdeckung 89 Wärmespeichermedium aus dem Pufferbehälter 21 in den Behälter 1. Auf diese Weise wird ein im Wesentlichen gleich bleibendes Volumen im Behälter 1 realisiert.

Vorteil der Positionierung des Pufferbehälters 21 derart, dass die Phasengrenze 69 auf ähnlicher hydrostatischer Höhe ist wie die Phasengrenze 87 des Wärmespeichermediums 3 im Behälter 1, ist, dass auch bei einem Stillstand der Zu- und Abfuhrpumpen nur geringe hydrostatische Kräfte auf die Speicher wirken. Zudem benötigt der Betrieb der Pumpen zum Volumenausgleich nur einen minimalen Aufwand an Energie.

Weiterhin ist es vorteilhaft, wenn, wie in Figur 10 dargestellt, der Pufferbehälter 21 eine große Querschnittsfläche aufweist. Aufgrund einer großen Querschnittsfläche bewirken durch Temperaturänderung unvermeidliche Volumenänderungen der flüssigen Phase des Wärmespeichermediums nur geringe Änderungen der hydrostatischen Höhe der Flüssigkeitsoberfläche 69 im Pufferspeicher 21. Als Folge hiervon bleiben die Folgen hydrostatischer Kräfte gering.

**Bezugszeichenliste**

| | | | |
|---|---|---|---|
| 1 | Behälter | 69 | kalte Phasengrenze |
| 3 | Wärmespeichermedium | 71 | Wärmetauscher |
| 5 | Abdeckung | 73 | Einbauten |
| 7 | flexible Bereiche | 75 | Bereich mit Temperaturschichtung |
| 9 | Wandung des Behälters 1 | 77 | isothermer Bereich |
| 11 | Tauchpumpe | 79 | Öffnung |
| 13 | Saugbereich | 81 | obere Öffnung |
| 15 | Kammer | 83 | kalte Zone |
| 17 | Wandung | 85 | Entlüftung |
| 19 | Öffnung | 87 | Phasengrenze |
| 21 | Pufferbehälter | 89 | Abdeckung |
| 23 | Gaszuleitung | | |
| 25 | Gasabfuhr | | |
| 27 | untere Leitung | | |
| 29 | Pumpe | | |
| 31 | Wärmetauscher | | |
| 33 | obere Leitung | | |
| 35 | Abdeckung | | |
| 37 | Reihenschichtenspeicher | | |
| 39 | Leitung | | |
| 41 | Leitung | | |
| 43 | erster Leitungsabschnitt | | |
| 45 | zweiter Leitungsabschnitt | | |
| 47 | Schichtenspeicher | | |
| 49 | oberer Bereich | | |
| 51 | unterer Bereich | | |
| 53 | Temperaturgrenze | | |
| 55 | Sammler/Verteiler | | |
| 57 | Leitung | | |
| 59 | Ring | | |
| 61 | Öffnung | | |
| 63 | erster Pufferbehälter | | |
| 65 | Boden | | |
| 67 | zweiter Pufferbehälter | | |

## Patentansprüche

1. Vorrichtung zur Speicherung von Wärme in einem Solarkraftwerk, umfassend ein Wärmespeichermedium, das zur Speicherung von Wärme Wärme aufnimmt und zur Nutzung der gespeicherten Wärme Wärme abgibt, sowie einen Behälter zur Aufnahme des Wärmespeichermediums, wobei der Behälter mit einer gasdichten Abdeckung verschlossen ist, **dadurch gekennzeichnet, dass** Mittel zum Volumenausgleich umfasst sind, um eine Volumenzunahme des Wärmespeichermediums (3) aufgrund Temperaturzunahme und eine Volumenabnahme aufgrund Temperaturabnahme auszugleichen.

2. Vorrichtung gemäß Anspruch 1, **dadurch gekennzeichnet, dass** die Mittel zum Volumenausgleich eine flexible Abdeckung (5) des Behälters (1) umfassen.

3. Vorrichtung gemäß Anspruch 2, **dadurch gekennzeichnet, dass** die flexible Abdeckung (5) flexible Bereiche (7) umfasst, die sich bei einer Volumenzunahme des Wärmespeichermediums (3) anheben und die bei einer Volumenabnahme des Wärmespeichermediums (3) absenken.

4. Vorrichtung gemäß einem der Ansprüche 1 bis 3, **dadurch gekennzeichnet, dass** die Mittel zum Volumenausgleich einen Pufferbehälter (21; 63, 67) umfassen, in den bei einer Volumenzunahme des Wärmespeichermediums (3) ein Teil des Wärmespeichermediums (3) strömen kann.

5. Vorrichtung gemäß einem der Ansprüche 1 bis 4, **dadurch gekennzeichnet, dass** die Vorrichtung zur Speicherung von Wärme als Schichtenspeicher (47) ausgebildet ist.

6. Vorrichtung gemäß einem der Ansprüche 1 bis 5, **dadurch gekennzeichnet, dass** das Wärmespeichermedium (3) Schwefel enthält.

7. Verfahren zur Speicherung von Wärme in einem Solarkraftwerk, bei dem zur Speicherung von Wärme Wärme an ein Wärmespeichermedium übertragen wird oder zur Nutzung der Wärme Wärme aus dem Wärmespeichermedium an den Wärmeträger abgeführt wird, wobei das Wärmespeichermedium in einem Behälter aufgenommen ist, der mit einer gasdichten Abdeckung verschlossen ist, **dadurch gekennzeichnet, dass** eine Volumenausdehnung des Wärmespeichermediums (3) durch eine Volumenvergrößerung des Behälters (1) oder durch Strömen von Wärmespeichermedium (3) aus dem Behälter (1) in einen Pufferbehälter (21; 63, 65) ausgeglichen wird und eine Volumenabnahme des Wärmespeichermediums (3) durch eine Volumenverkleinerung des Behälters (1) oder durch Strömen von Wärmespeichermedium (3) aus dem Pufferbehälter (21; 63, 65) in den Behälter (1) ausgeglichen wird.

8. Verfahren gemäß Anspruch 7, **dadurch gekennzeichnet, dass** eine Volumenvergrößerung des Behälters (1) erzielt wird, indem sich flexible Bereiche (7) einer flexiblen Abdeckung (5) ausdehnen.

9. Verfahren gemäß Anspruch 7 oder 8, **dadurch gekennzeichnet, dass** dem Behälter (1) warmes Wärmespeichermedium (3) im oberen Bereich zugeführt wird und kaltes Wärmespeichermedium (3) im unteren Bereich entnommen wird.

10. Verfahren gemäß einem der Ansprüche 7 bis 9, **dadurch gekennzeichnet, dass** dem Wärmespeichermedium (3) Wärme eines Solarkraftwerks zugeführt wird.

11. Verfahren gemäß Anspruch 10, **dadurch gekennzeichnet, dass** das Solarkraftwerk ein Parabolrinnensolarkraftwerk ist.

## Claims

1. A device for storing heat in a solar power station, comprising a heat storage medium which absorbs heat in order to store heat and releases heat in order to use the stored heat, and a container for holding the heat storage medium, the container being closed by a gastight cover, wherein the device comprises volume compensation means in order to compensate for a volume increase of the heat storage medium (3) due to a temperature rise and a volume decrease due to a temperature reduction.

2. The device according to claim 1, wherein the volume compensation means comprise a flexible cover (5) of the container (1).

3. The device according to claim 2, wherein the flexible cover (5) comprises flexible regions (7), which are raised when there is a volume increase of the heat storage medium (3) and which are lowered when there is a volume decrease of the heat storage medium (3).

4. The device according to one of claims 1 to 3, wherein the volume compensation means comprise a buffer container (21; 63, 67), into which a part of the heat storage medium (3) can flow when there is a volume increase of the heat storage medium (3).

5. The device according to one of claims 1 to 4, wherein the heat storage device is formed as a stratified storage tank (47).

6. The device according to one of claims 1 to 5, wherein the heat storage medium (3) contains sulfur.

7. A method for storing heat in a solar power station, in which heat is transferred to a heat storage medium in order to store heat or heat is discharged from the heat storage medium to the heat carrier in order to use the heat, the heat storage medium being held in a container which is closed by a gastight cover, wherein a volume expansion of the heat storage medium (3) is compensated for by a volume increase of the container (1) or by heat storage medium (3) flowing out of the container (1) into a buffer container (21; 63, 65), and a volume decrease of the heat storage medium (3) is compensated for by a volume decrease of the container (1) or by heat storage medium (3) flowing out of the buffer container (21; 63, 65) into the container (1).

8. The method according to claim 7, wherein a volume increase of the container (1) is achieved by flexible regions (7) of a flexible cover (5) expanding.

9. The method according to claim 7 or 8, wherein hot heat storage medium (3) is delivered to the container (1) in the upper region and cold heat storage medium (3) is taken from it in the lower region.

10. The method according to one of claims 7 to 9, wherein heat from a solar power station is delivered to the heat storage medium (3).

11. The method according to claim 10, wherein the solar power station is a parabolic trough solar power station.

## Revendications

1. Dispositif d'accumulation de chaleur pour centrale solaire, comprenant un fluide d'accumulation de chaleur qui reprend de la chaleur pour accumuler de la chaleur et qui délivre de la chaleur pour permettre d'utiliser la chaleur accumulée ainsi qu'un récipient qui reprend le fluide d'accumulation de chaleur, le récipient étant fermé par un couvercle étanche aux gaz,
**caractérisé en ce que**
le dispositif comprend des moyens de compensation de volume qui compensent l'augmentation de volume du fluide (3) d'accumulation de chaleur qui fait suite à une augmentation de la température et la diminution de volume du fluide d'accumulation de chaleur qui fait suite à une diminution de la température.

2. Dispositif selon la revendication 1, **caractérisé en ce que** les moyens de compensation de volume comprennent un couvercle flexible (5) du récipient (1).

3. Dispositif selon la revendication 2, **caractérisé en ce que** le couvercle flexible (5) comporte des parties flexibles (7) qui se relèvent en cas d'augmentation de volume du fluide (3) d'accumulation de chaleur et s'abaissent en cas de diminution de volume du fluide (3) d'accumulation de chaleur.

4. Dispositif selon l'une des revendications 1 à 3, **caractérisé en ce que** les moyens de compensation de volume comprennent un récipient tampon (21; 63, 67) dans lequel une partie du volume du fluide (3) d'accumulation de chaleur peuvent pénétrer en cas d'augmentation de volume du fluide (3) d'accumulation de chaleur.

5. Dispositif selon l'une des revendications 1 à 4, **caractérisé en ce que** le dispositif d'accumulation de chaleur est configuré comme accumulateur stratifié (47).

6. Dispositif selon l'une des revendications 1 à 5, **caractérisé en ce que** le fluide (3) d'accumulation de chaleur contient du soufre.

7. Procédé d'accumulation de chaleur pour centrale solaire, dans lequel de la chaleur est transférée à un fluide d'accumulation de chaleur pour accumuler de la chaleur ou de la chaleur est extraite du fluide d'accumulation de chaleur pour permettre d'utiliser la chaleur, ainsi le fluide d'accumulation de chaleur étant repris dans un récipient fermé par un couvercle étanche aux gaz,
**caractérisé en ce que**
une augmentation de volume du fluide (3) d'accumulation est compensée par une augmentation du volume du récipient (1) ou par écoulement du fluide (3) d'accumulation de chaleur hors du récipient (1) et dans un récipient tampon (21; 63,65) et
**en ce qu'**une diminution de volume du fluide (3) d'accumulation est compensée par une diminution du volume du récipient (1) ou par écoulement du fluide (3) d'accumulation de chaleur hors du récipient tampon (21; 63,65) et dans le récipient (1).

8. Procédé selon la revendication 7, **caractérisé en ce que** l'augmentation du volume du récipient (1) est obtenue par le fait que des parties flexibles (7) d'un couvercle flexible (5) de dilatent.

9. Procédé selon les revendications 7 ou 8, **caractérisé en ce que** du fluide (3) d'accumulation de chaleur chaud est amené au récipient (1) dans la partie supérieure et du fluide (3) d'accumulation de chaleur froid est prélevé dans la partie inférieure.

10. Procédé selon l'une des revendications 7 à 9, **caractérisé en ce que** de la chaleur provenant d'une centrale solaire est amenée dans le fluide (3) d'accumulation de chaleur.

11. Procédé selon la revendication 10, **caractérisé en ce que** la centrale solaire est une centrale solaire à capteur cylindro-parabolique.
